# EUROPÄISCHE PATENTSCHRIFT

(11) **EP 2 183 175 B1**
(45) Veröffentlichungstag und Bekanntmachung des Hinweises auf die Patenterteilung: **01.12.2010**
(21) Anmeldenummer: 08785572.2
(22) Anmeldetag: 15.08.2008
(51) Int. Cl.: B65G 43/08, B65G 47/31

(54) **MATERIALFLUSSSTEUERUNG ZUR KOLLISIONSVERMEIDUNG IN EINER FÖRDERANLAGE**
MATERIAL FLOW CONTROL FOR COLLISION AVOIDANCE IN A CONVEYING SYSTEM
GESTION DU FLUX DE MATÉRIAUX PERMETTANT D'ÉVITER DES COLLISIONS DANS UN SYSTÈME DE TRANSPORT

(30) Priorität: 17.08.2007 DE 102007040367
(43) Veröffentlichungstag der Anmeldung: 12.05.2010
(73) Patentinhaber: SSI Schäfer Peem GmbH, 8051 Graz (AT)
(72) Erfinder: SCHAEFER, Gerhard, 57290 Neunkirchen (DE)
(74) Vertreter: Witte, Weller & Partner
(86) Internationale Anmeldenummer: PCT/EP2008/006727
(87) Internationale Veröffentlichungsnummer: WO 2009/024298

(56) Entgegenhaltungen:
- EP-A- 0 577 021
- WO-A-97/09256

## Beschreibung

Die vorliegende Erfindung betrifft eine Förderanlage sowie ein Verfahren zur Vermeidung von Kollisionen von Transporteinheiten bzw. Fördergütern an Schnittpunkten von Förderstrecken, wenn sie sich z.B. im Schnittpunkt kreuzen oder zu einer einzigen Förderstrecke zusammenlaufen.

Aus dem Stand der Technik sind Förderstreckenweichen bzw. -kreuzungen bekannt, bei denen die Fördergüter angehalten werden, sollte eine Kollision mit Fördergütern einer anderen Förderstrecke drohen. Das Anhalten der Fördergüter erfolgt üblicherweise durch abruptes Abbremsen. Danach werden die Fördergüter wieder beschleunigt, sobald die anderen Fördergüter den Schnittpunkt passiert haben.

Die WO 97/09256 offenbart ein Verfahren und eine Vorrichtung zum Einschleusen von Stückgutteilen auf einen Abnahmeförderer. Die Stückgutteile werden über einen Abgabeförderer zum Abnahmeförderer transportiert. Der Abgabeförderer umfasst wenigstens ein Pufferband, ein Abrufband und ein Einschleusband. Das Pufferband, das Abrufband und das Einschleusband können mit unterschiedlichen Geschwindigkeiten betrieben werden. Der Abnahmeförderer wird mit einer konstanten Geschwindigkeit betrieben. So ist es möglich, dass Stückgutteile vom Abgabeförderer an vorbestimmte Zielstellen auf dem Abnahmeförderer gelenkt werden.

Die DE 10 2004 035 821 offenbart ein Verfahren und eine Vorrichtung zur dynamischen Lückenoptimierung. Das Verfahren dient zum Reduzieren und Vereinheitlichen von Abständen zwischen Stückgütern, die z.B. auf Transportbändern befördert werden. Auf diese Weise kann die Dichte optimiert werden. Auch eine Steigerung der Auslastung der Förderer ist möglich.

Die EP 1 228 986 A1 offenbart ebenfalls ein Verfahren und eine Vorrichtung zur Lückenoptimierung auf einem Förderband.

Das Abbremsen sowie das Beschleunigen erfordert relativ viel Energie, d.h. solche Anlagen arbeiten energieineffizient. Ferner ist ein relativ hoher Wartungsaufwand bei solchen bekannten Anlagen erforderlich, da die Antriebe der Förderstrecken durch das ständige Bremsen und Beschleunigen stark beansprucht werden. Ein weiterer Nachteil ist darin zu sehen, dass das Bremsen und Beschleunigen laut ist.

Es ist daher eine Aufgabe der vorliegenden Erfindung, eine Förderanlage sowie ein Verfahren zum Fördern von Transporteinheiten vorzusehen, die energieeffizienter, wartungsfreier und leiser sind. Insbesondere soll der Durchsatz von Transporteinheiten an einem Schnittpunkt erhöht werden, d.h., es sollen mehr Transporteinheiten pro Zeiteinheit den Schnittpunkt passieren können.

Diese Aufgaben werden mit einer Förderanlage gelöst, die aufweist: zumindest eine erste und eine zweite Förderstrecke zum Fördern von Transporteinheiten, insbesondere von Behältern, Stückgütern, Kartons, etc., in einer stromabwärts orientierten Richtung, wobei sich die Förderstrecken entweder in einem gemeinsamen Schnittpunkt kreuzen oder sich im Schnittpunkt zu einer einzigen Strecke vereinen, wobei jede der Förderstrecken stromabwärts relativ zum Schnittpunkt jeweils eine Gruppe von Förderstreckensegmenten aufweist; zumindest eine Steuereinrichtung zum Einstellen variabler Fördergeschwindigkeiten bei jeder Förderstrecke; zumindest eine Sensoreinrichtung zum Erfassen einer Verkehrsdichte der Transporteinheiten auf den Förderstrecken, insbesondere bei am weitesten stromaufwärts gelegenen Förderstreckensegmenten der Gruppen; wobei jedes Förderstreckensegment von der Steuereinrichtung derart ansteuerbar ist, dass es mit einer variablen, insbesondere kontinuierlich veränderbaren, Fördergeschwindigkeit betrieben werden kann; wobei die Steuereinrichtung angepasst ist, die Verkehrsdichte zu bestimmen, und die weiter angepasst ist, erste Steuersignale zu erzeugen, um die Fördergeschwindigkeiten der Förderstreckensegmente der einen Förderstrecke so anzupassen, dass eine Transporteinheit, die auf der Förderstrecke befördert wird, am Schnittpunkt nicht mit Transporteinheiten kolliediert, die auf der anderen Förderstrecke befördert werden, und zwar ohne dass die Transporteinheiten dazu angehalten werden.

Diese Aufgaben werden ferner mit dem erfindungsgemäßen Verfahren zum Zusammenführen bzw. Kreuzen von zumindest zwei Förderstrecken gelöst, auf denen Transporteinheiten, insbesondere Behälter, in einer stromabwärts orientierten Richtung befördert werden, wobei sich die Förderstrecken in einem Schnittpunkt treffen, wobei jede Förderstrecke stromaufwärts relativ zum Schnittpunkt jeweils eine Gruppe von Förderstreckensegmenten aufweist, wobei die Förderstreckensegmente jeweils mit einer variablen Fördergeschwindigkeit betrieben werden können, mit den folgenden Schritten: Fördern von Transporteinheiten hin zum Schnittpunkt; Erfassen und Bestimmen einer Verkehrsdichte der Transporteinheiten auf den Förderstrecken, insbesondere bei am weitesten stromaufwärts gelegenen Förderstreckensegmenten; Bestimmen von Fördergeschwindigkeiten für die Förderstreckensegmente derart, dass Transporteinheiten, die auf der einen Förderstrecke gefördert werden, im Schnittpunkt nicht mit Transporteinheiten kollidieren, die auf der anderen Förderstrecke befördert werden, und ohne dass die Transporteinheiten im Bereich der Förderstreckensegmente dazu angehalten werden; und Anpassen der Fördergeschwindigkeiten der Förderstreckensegmente an die so bestimmten Fördergeschwindigkeiten.

Die vorliegende Erfindung zeichnet sich dadurch aus, dass, wie im Straßenverkehr, "vorausschauend" gefördert wird. Dies bedeutet., dass z.B. ein Steuerungsrechner frühzeitig erkennt, ob sich zwei oder mehr Transporteinheiten an einer Kreuzung bzw. einem Schnittpunkt begegnen, insbesondere miteinander kollidieren. Der Steuerungsrechner kann dann entsprechend gegensteuern, indem er eine oder mehrere, insbesondere alle, Transporteinheiten entweder bremst oder zusätzlich beschleunigt. Die Geschwindigkeit, mit der die Transporteinheiten befördert werden, werden also an die jeweilige Situation (Verkehrsdichte) angepasst, und zwar so, dass keine der Transporteinheiten auf die Geschwindigkeit Null abgebremst wird und dass keine Kollisionen stattfinden.

Wenn man eine Weiche bzw. Kreuzung gemäß dem Stand der Technik mit einer Ampelkreuzung vergleicht, bei der die Ampeln eine Kollision verhindern, indem eine Richtung rotes Licht und die andere grünes Licht bekommt, dann ist die vorliegende Erfindung gut mit einem Kreiselverkehr vergleichbar. Bevor eine Transporteinheit in den Kreisel einfährt, verschafft sich der Steuerungsrechner ein Bild über die momentane Lage (verkehrsdichte), und zwar zumindest in einem Bereich der in (unmittelbarer) Nähe zum Kreisel liegt.

Es gibt vielfältige Möglichkeiten, eine Kollision zu verhindern, ohne dass eine der Transporteinheiten zum Stillstand kommt. Alle oder einige der Transporteinheiten können entweder beschleunigt oder abgebremst werden, während andere Transporteinheiten mit gleichbleibender Geschwindigkeit transportiert werden. Der Steuerungsrechner kann die Fördergeschwindigkeit einer sich auf den Kreuzungspunkt zubewegenden Transporteinheit so wählen, dass diese Transporteinheit genau dann ankommt, wenn sich am Kreuzungspunkt eine Lücke bietet, in die die Transporteinheit dann hineingeführt kann.

Die vorliegende Erfindung hat den Vorteil, dass weniger Energie als bei einem ständigen Wechseln zwischen vollständigen Stillstand und erneuter Beschleunigung benötigt wird. Ferner lässt sich ein höherer Durchsatz als bei herkömmlichen Weichen und Kreuzungen erzielen, bei denen einige Transporteinheiten zum Stillstand kommen müssen, um den "Verkehr" zu regeln.

Die Förderanlage und das Verfahren gemäß der vorliegenden Erfindung sind auch leiser als bekannte Vorrichtungen bzw. Verfahren.

Ein weiterer Vorteil ist darin zu sehen, dass die beteiligten Komponenten, wie z.B. Antriebe, Bremsen, etc., weniger als bei einem abrupten Stillstand mit anschließender erneuter Beschleunigung verschlissen werden.

Gemäß einer bevorzugten Ausführungsform ist die Steuereinrichtung ferner angepasst, Steuersignale zu erzeugen, um auch die Fördergeschwindigkeit der Förderstreckensegmente der ersten Förderstrecke so anzupassen, dass die Transporteinheiten nicht vor dem Schnittpunkt angehalten werden müssen bzw. dort miteinander kollidieren.

Mit anderen Worten, sowohl die Geschwindigkeit der Transporteinheiten im Kreisel als auch die Geschwindigkeit solcher Transporteinheiten, die in den Kreisel einzuführen sind, kann ohne Stillstände variiert werden.

Außerdem ist es von Vorteil, wenn die Steuereinrichtung angepasst ist, zusammenhängende Transporteinheiten als Verbund zu erkennen und ein Verbund wie eine einzelne Transporteinheit zu behandeln.

Es kommt häufiger vor, dass mehrere Transporteinheiten zu einem Verbund ("slug") gruppiert werden, der vorzugsweise nicht getrennt werden soll. So können z.B. alle Artikel, die zur Abarbeitung eines Kommissionierauftrags erforderlich sind, hintereinander aufgereiht werden und als Verbund durch die Förderanlage transportiert werden. Üblicherweise sind die Abstände zwischen zusammengehörenden Transporteinheiten sehr gering (z.B. 5cm), so dass, obwohl Abstände zwischen den Transporteinheiten vorhanden sind, es von Vorteil ist, diesen Verbund nicht aufzulösen. In einem solchen Fall wird der Verbund in seiner Gesamtheit entweder verlangsamt oder beschleunigt.

Ferner ist es bevorzugt, wenn die Steuereinrichtung angepasst ist, zweite Steuersignale zu erzeugen, so dass Transporteinheiten eines Verbunds vereinzelt werden.

Es kann immer wieder vorkommen, dass mehrere Transporteinheiten dicht hintereinander aufgestaut werden und ähnlich wie ein Verbund durch die Förderanlage transportiert werden. Hier kann es wünschenswert sein, eine Lücke in dieser verbundähnlichen Gruppe von Transporteinheiten zu schaffen, um eine oder mehrere einzuschleusen.

Auch ist es von Vorteil, wenn die Sensoreinrichtung eine Kamera ist, die ein Bild von den Förderstrecken stromaufwärts zum Schnittpunkt erzeugt. Alternativ kann die Sensoreinrichtung eine oder mehrere Lichtschranken oder Drucksensoren sein.

Mit den Sensoreinheiten wird überwacht, wann eine Transporteinheit in den steuerungsrelevanten Bereich vor, d.h. stromaufwärts relativ zu, einen Schnittpunkt gelangt, wo die Transport- bzw. Fördergeschwindigkeit entsprechend angepasst werden kann, um eine Kollision zu vermeiden.

Gemäß einer weiteren bevorzugten Ausführungsform ist die Sensoreinrichtung derart weit stromaufwärts vom Schnittpunkt entfernt angeordnet, dass die Steuereinrichtung die zur Kollisionsvermeidung erforderlichen Steuersignale in Echtzeit berechnen kann.

Die vorliegenden Erfindung zeichnet sich durch eine hohe Flexibilität aus. Die vorliegende Erfindung ist dazu in der Lage, in Echtzeit auf "Verkehrssituationen" zu reagieren. Es geht im vorliegenden Fall also nicht um einen Steuerungsablauf, die über einen längeren Zeitraum (Stunden, Tage, etc) im Voraus geplant werden kann. In hochdynamischen Systemen, in welchen die vorliegende Erfindung zum Einsatz kommt, können sich die Anforderungen an eine Förderanlagensteuerung im Sekundentakt ändern. Der Materialfluss in einer Förderanlage, insbesondere in einer Kommissionieranlage, ist hochdynamisch. Deshalb sollte eine (übergeordnete) Steuerung mit einer gewissen Intelligenz ausgestattet, um Probleme vorherzusehen und gleichzeitig eine Lösung der Probleme bereitzustellen.

Gemäß einer weiteren besonderen Ausgestaltung ist bei jedem Förderstreckensegment eine untergeordnete Steuereinrichtung vorgesehen, die wiederum an die Steuereinrichtung gekoppelt ist und die z.B. einen Antrieb des Förderstreckensegments regelt.

Hier wird das Prinzip einer dezentralen Steuerungslogik realisiert. Die übergeordnete Steuerung wird entlastet und hat somit größere Restkapazitäten.

Außerdem hat es sich als besonders vorteilhaft herausgestellt, wenn die Sensoreinrichtung angepasst ist, Signale für die Steuereinrichtung zu liefern, die zum Ermitteln einer Transportgeschwindigkeit jeder Transporteinheit geeignet ist.

Üblicherweise geht man davon aus, dass die Steuereinrichtung Kenntnis von den in der Anlage herrschenden Transportgeschwindigkeiten hat, indem sie Kenntnis von der Fördergeschwindigkeiten der einzelnen Förderstreckensegmente hat. Nichtsdestotrotz kann es wünschenswert sein, diese "theoretischen" Geschwindigkeiten in der Praxis zu überprüfen. Deshalb können Sensoreinrichtungen eingesetzt werden, mit denen nicht nur der Ort einer Transporteinheit sondern auch deren Geschwindigkeit bestimmt werden kann.

Bei einer besonders vorteilhaften Ausgestaltung des erfindungsgemäßen Verfahrens werden die Förderstrecken in einem Normalzustand mit einer konstanten mittleren Fördergeschwindigkeit betrieben, wobei die Fördergeschwindigkeiten der Förderstreckensegmente, wenn eine Kollision droht, gegenüber der konstanten mittleren Fördergeschwindigkeit, insbesondere kontinuierlich, erhöht und/oder abgesenkt werden können.

Ferner ist es von Vorteil, wenn beliebig aufeinander folgende Förderstreckensegmente mit unterschiedlichen Fördergeschwindigkeiten betrieben werden können.

Dies ermöglicht eine Aufstauung bzw. eine Vereinzelung von Transporteinheiten auf ein und derselben Förderstrecke, insbesondere gleichzeitig.

Weiter ist es bevorzugt, wenn die Fördergeschwindigkeiten so angepasst werden, dass zumindest eine Lücke in einem Verbund von mehreren, direkt aufeinander folgenden Transporteinheiten geschaffen wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: zeigt eine Draufsicht auf eine Förderanlage gemäß der vorliegenden Erfindung;
- Fig. 2A-2D: zeigen eine Sequenz, die das erfindungsgemäße Verfahren widerspie- gelt;
- Fig. 3A-3C: zeigen eine alternative Ausführungsform des erfindungsgemäßen Verfahrens; und
- Fig. 3D: zeigt eine weitere Alternative des erfindungsgemäßen Verfahrens;
- Fig. 4A-4D: zeigen mehrere unterschiedliche Ausführungsformen einer erfindungs- gemäßen Förderanlage; und
- Fig. 5: zeigt ein Flussdiagramm des Verfahrens gemäß der vorliegenden Erfindung.

Bei der nachfolgenden Figurenbeschreibung werden gleiche Elemente mit den gleichen Bezugszeichen versehen werden. Sollten Merkmale anders als bei einer vorhergehenden Erläuterung ausgebildet sein, so wird darauf explizit hingewiesen werden.

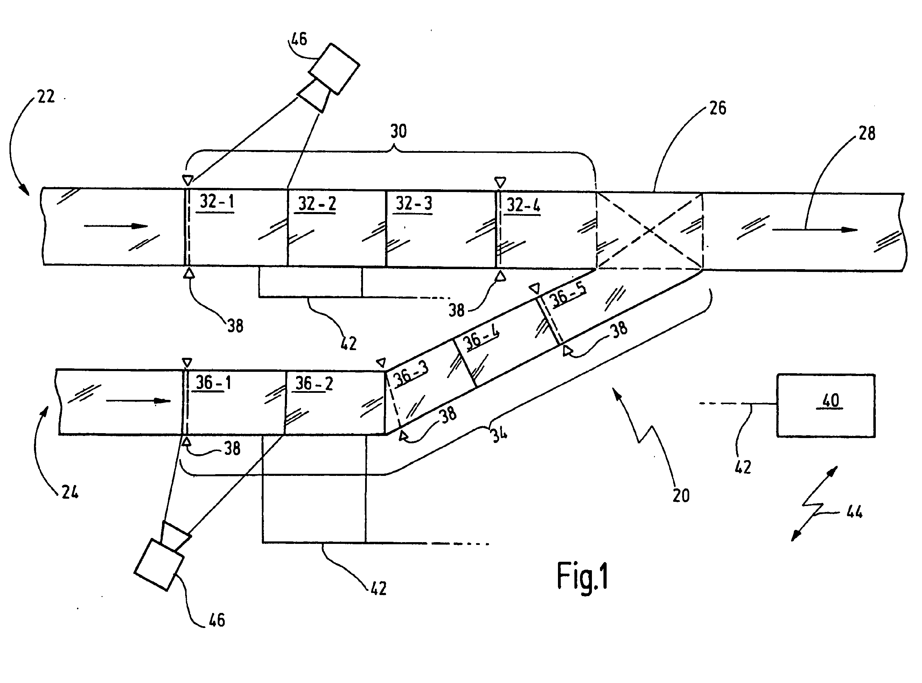

Die vorliegende Erfindung betrifft eine Kommissionieranlage 20, wie sie exemplarisch in der Draufsicht der Figur 1 dargestellt ist.

Die vorliegende Erfindung ist insbesondere in Kommissionierlagern einsetzbar. In Kommissionieranlagen werden Waren, Artikel, Stückgüter, etc.,oft auf Ladehilfsmitteln (Tablare, Paletten, Behälter, usw.) geladen, um durch die Kommissionieranlage transportiert bzw. befördert zu werden. Die Artikel können aber auch ohne Ladehilfsmittel transportiert werden. Als Transporteinheit wird nachfolgend entweder die Kombination aus Artikel bzw. Ware mit Ladehilfsmittel oder ein Artikel ohne Ladehilfsmittel verstanden werden. Üblicherweise werden Verpackungseinheiten als Artikel gehandhabt. Eine Steige aus zwölf Milchtüten kann bspw. als ein Artikel angesehen werden. Gleiches gilt für Arzneimittelchargen, die mehrere Einzelpackungen enthalten können. Vorzugsweise werden zum Transport der Verpackungseinheiten Behälter eingesetzt, insbesondere mit konstanten Abmessungen. Die Kombination aus Behälter und darin enthaltenen Artikeln stellt also ein Beispiel für eine Transporteinheit dar.

Mit der erfindungsgemäßen Förderanlage werden Transporteinheiten zum Beispiel aus einem Lager geholt und zu einem Kommissionierplatz, einer Sortieranlage, einer Versandstation, etc. befördert.

Förderanlagen weisen üblicherweise eine Vielzahl von Förderstrecken auf. Es gibt unterschiedliche Typen von Förderern. So sind zum Beispiel Kettenförderer, Rollenförderer, Gurtbänder, Hängeförderer, etc. bekannt. Die Implementierung der Erfindung ist unabhängig vom erwendeten Typ. Im Nachfolgenden wird die Erfindung exemplarisch anhand eines Gurtfördersystems erklärt werden.

In Fig. 1 ist ein Ausschnitt einer Förderanlage 20 gezeigt. Der Ausschnitt der Fig. 1 zeigt eine Draufsicht auf zwei Gurtförderstrecken 22 und 24, die sich in einem Schnittpunkt 26 treffen. Der Schnittpunkt 26 ist mit einem Rechteck gekennzeichnet, das mit einer Strichlinie umrandet und mit einem Strichlinienkreuz versehen ist. Transporteinheiten (hier nicht dargestellt) werden stromabwärts, d.h. in der Fig. 1 von links nach rechts, entlang einer Förderrichtung 28 transportiert, die mittels dunklen Pfeilen angedeutet ist.

Stromaufwärts zum Schnittpunkt 26, d.h. in der Fig. 1 links vom Schnittpunkt 26, weist die erste Förderstrecke 22 eine Gruppe 30 von Förderstreckensegmenten 32 auf. Die hier dargestellten vier Förderstreckensegmente 32-1 bis 32-4 sind einzeln ansteuerbar, d.h. sie können unabhängig voneinander betrieben werden. Gurtfördersegmente sind im Stand der Technik bekannt. Die zweite Förderstrecke 24 weist stromaufwärts relativ zum Schnittpunkt 26 fünf Förderstreckensegmente 36-1 bis 36-5 in Form einer Gruppe 34 auf. Im Nachfolgenden werden diese Gruppen 30, 34 auch als Vorzonen bezeichnet werden.

Üblicherweise werden Förderstreckensegmente in Kommissionieranlagen mit einer durchschnittlichen Geschwindigkeit von 1,0 bis 1,2 m/s betrieben. Die Förderstreckensegmente der vorliegenden Erfindung können mit Geschwindigkeiten bis zu 2 m/s betrieben werden. Die minimale Geschwindigkeit beträgt dabei 0,1 m/s. Die Fördergeschwindigkeit der Förderstreckenelemente kann kontinuierlich zwischen diesen beiden Extremwerten verändert werden. Üblicherweise erfolgt die Änderung jedoch diskret, und zwar in Form von Schritten der Größe 0,1 m/s. Bei der vorliegenden Erfindung wird vorzugsweise eine der Förderstrecken permanent mit der maximalen Geschwindigkeit betrieben, während sich die andere Förderstrecke so anpasst, dass es zu keinen Kollisionen zwischen Fördergütern kommt.

Es versteht sich, dass die Anzahl der Förderstreckensegmente pro Gruppe beliebig variiert werden kann. Die Anzahl der Förderstreckensegmente der einzelnen Gruppen muss nicht gleich sein. Auch können in den jeweiligen Strecken Förderstreckensegmente unterschiedlichen Typs verwendet werden. So könnte die erste Förderstrecke 22 zum Beispiel aus Gurtförderern bestehen, wohingegen die zweite Förderstrecke 24 aus Rollenförderern besteht. Außerdem versteht es sich, dass die Förderer nicht zwingend linear ausgerichtet sein müssen. Es können auch Förderer mit einer Krümmung (Kurvenelemente) eingesetzt werden.

Am stromaufwärts gelegenen Förderstreckensegment 32-1 bzw. 36-1 ist vorzugsweise an dessen stromaufwärtigem Ende jeweils eine Sensoreinheit 38, wie z.B. eine Lichtschranke, vorgesehen. Die Position der Lichtschranke 38 kann relativ zum Förderstreckensegment 32 bzw. 36 variieren. Es versteht sich, dass auch andere Sensortypen, wie z.B. Drucksensoren in den Rollen eines Gurtförderers oder eines Rollenförderers verwendet werden können, um zu erfassen, wann eine Transporteinheit (nicht dargestellt) in eine Zone vor dem Schnittpunkt 26 gelangt, wo die Transportgeschwindigkeit der Transporteinheit an eine jeweilige Situation angepasst werden kann. Die Transportgeschwindigkeit ist an diesem Ort ist üblicherweise bekannt.

Im vorliegenden Fall der Fig. 1 stellen die Gruppen 30 und 34 von Förderstreckensegmente diese Vorzonen vor dem Schnittpunkt 26 dar. Die Länge der Vorzonen kann beliebig gewählt werden. Sie sollten aber zumindest ausreichend lang sein, d.h. ausreichend viele Förderstreckensegmente enthalten, um flexibel auf eine Vielzahl von verschiedenen Verkehrsdichten reagieren zu können.

Wenn im Nachfolgenden der Begriff "Verkehrsdichte" verwendet wird, so bezieht sich dies auf die in diesem Moment in der Förderanlage 20, insbesondere im Gebiet des Schnittpunkts 26, befindlichen Transporteinheiten, wobei man idealerweise deren Ort und Geschwindigkeit zu einem vorgegebenen Zeitpunkt möglichst genau kennt. Die Sensoreinheiten 38 dienen zumindest zum Bestimmen der Orte. Alternativ können sie zur Geschwindigkeitsbestimmung eingesetzt werden. Die Verkehrsdichte sagt etwas darüber aus, wie viele Transporteinheiten sich dem Schnittpunkt 26 näheren, welche Geschwindigkeiten sie haben und wo sie sich gerade befinden. Mit Hilfe der Verkehrsdichte können Kollisionen am Schnittpunkt 26 vorhergesagt werden.

Die von den Sensoren 38 ermittelten Daten (insbesondere Ort, Zeit und/oder Geschwindigkeit) werden über eine Leitung 42 an eine Steuerung 40 zur weiteren Bearbeitung weitergeleitet. Die Steuerung ermittelt aus den Daten der Sensoren 38 die Verkehrsdichte. Bei der Leitung 42 handelt es sich insbesondere um ein Bussystem. Die Datenübertragung erfolgt alternativ drahtlos, wie es durch einen Doppelpfeil 44 in Fig. 1 angedeutet ist.

Alternativ oder ergänzend zu den Lichtschranken 38 können ein oder mehrere Kameras 46 eingesetzt werden. In diesem Fall verfügt die Steuerung 40 über entsprechende Bildverarbeitungseinrichtungen, um die benötigten Daten aus den Bildern der Kamera 46 extrahieren zu können.

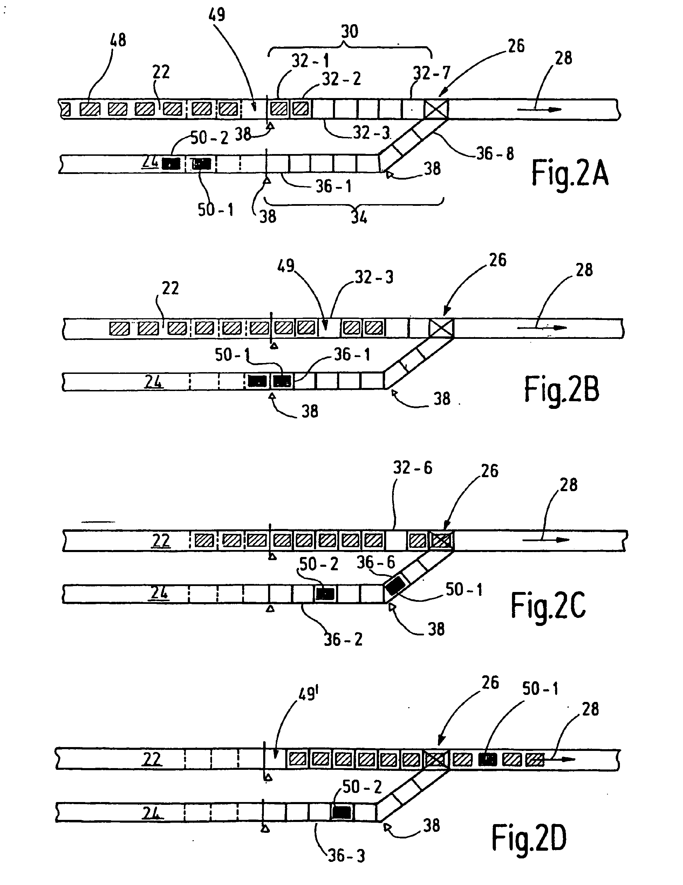

Es versteht sich, dass, neben den bisher erläuterten Sensoren 38 und 46 am stromaufwärts gelegenen Ende der Vorzonen, auch weitere Sensoren im Verlauf der Förderstrecken 22, 24 angeordnet sein können. Diese Sensoren können weiter stromaufwärts und/oder stromabwärts liegen. Mit Hilfe dieser Sensoren kann, insbesondere kurz vor dem Schnittpunkt 26, nochmals verifiziert werden, ob die von der Steuereinrichtung 40 eingeleiteten Geschwindigkeitsanpassungen auch tatsächlich umgesetzt wurden. Sensoren vor den Vorzonen ermöglichen einen umfassenderen Überblick über die Verkehrsdichte. Die Steuerung kann Kollisionen noch früher erkennen und im Bereich der Vorzonen 30, 34 dann entsprechende Gegenmaßnahmen einleiten, um die sich anbahnende Kollision abzuwenden. Es versteht sich, dass die Anzahl der Sensoren 38 möglichst gering gehalten wird, um die Investitionskosten und Wartungsarbeiten, die mit weiteren Sensoren verbunden sind, möglichst klein zu halten. Bezugnehmend auf die Figuren 2A bis 2D wird nachfolgend eine erfindungsgemäße Flusssteuerung zur Kollisionsvermeidung erläutert werden.

In Fig. 2A ist eine Ausgangssituation dargestellt, bei der zumindest zwei schraffiert dargestellte Transporteinheiten 48 auf der ersten Förderstrecke 22 in die Vorzone 30 vor dem Schnittpunkt 26 gelangt sind. Diese zwei Transporteinheiten 48 befinden sich in der Fig. 2A auf den Förderstreckensegmenten 32-1 und 32-2.

Auf der zweiten Förderstrecke 24 befinden sich zwei weitere Transporteinheiten 50-1 und 50-2, die schwarz dargestellt sind. Diese Transporteinheiten sind jedoch noch nicht in die Vorzone 34 vorgedrungen. Eine Kollision ist nicht in Sicht, da die Transporteinheiten für die Sensoren 38 bei der zweiten Förderstrecke 24 "außer Sicht" sind.

Die Steuerung 40 (vgl. Fig. 1) weiß somit also sicher, dass in der Vorzone 30 zwei Transporteinheiten 48 vorhanden sind, wohingegen in der Vorzone 34 keine Transporteinheiten vorhanden sind. Diese Situation beschreibt eine von vielen möglichen (momentabhängigen) Verkehrsdichten (in den Vorzonen 30 und 34), die hier hinsichtlich einer möglichen Kollision unkritisch ist. Es sei angemerkt, dass die Transportgeschwindigkeiten üblicherweise bei allen Förderstrecken 22, 24 einen mittleren konstanten Wert einnehmen, z.B. 1,5 m/s.

Fig. 2B zeigt die Förderanlage der Fig. 2A zu einem späteren Zeitpunkt.

Mittlerweile befinden sich vier Transporteinheiten 48 in der Vorzone 30 und eine Transporteinheit 50-1 in der Vorzone 34, und zwar auf dem Förderstreckensegment 36-1. Zwischen den vier Transporteinheiten in der Zone 30 ist ein Leerplatz bzw. eine Lücke 49 (vgl. Fig. 2A) vorhanden, in die die Transporteinheit 50-1 am Schnittpunkt 26 eingefügt werden könnte.

Es sei darauf hingewiesen, dass die Steuereinrichtung 40 für diesen Vorgang keine Kenntnis von der Verkehrsdichte stromaufwärts von den stromaufwärts gelegenen Enden der Vorzonen 30 und 34 haben muss, um die gewünschte Aktion (Einfügen der Transporteinheit 50-1) durchzuführen. Die Steuerungseinrichtung 40 verfügt über eine entsprechende "Intelligenz", d.h. Steuerungssoftware, die in der Lage ist, das Einfügen zu koordinieren.

Geht man davon aus, dass beide Förderstrecken 22 und 24 mit der gleichen mittleren Geschwindigkeit betrieben werden, so ist die Lücke 49 bzw. der freie Platz des Förderstreckensegments 32-3 noch fünf Plätze (inkl. Schnittpunkt 26) vom Schnittpunkt 26 entfernt. Die Transporteinheit 50-1 hingegen ist noch acht Förderstreckensegmentlängen vom Schnittpunkt 26 entfernt. Die Förderstreckensegmentlängen sind hier exemplarisch alle gleich. Sie können sich in der Realität natürlich auch unterscheiden. Die Längen sind der Steuereinrichtung bekannt, so dass sie diese bei einer Geschwindigkeitsanpassung berücksichtigen kann.

Im konkreten Beispiel der Fig. 2B bedeutet dies, dass die Transporteinheit 50-1 schneller transportiert werden muss, um einen längeren Weg in der gleichen Zeit zurückzulegen, wie die Lücke 49 auf der ersten Förderstrecke 22.

In der Situation der Fig. 2C hat die Steuereinrichtung 40 die Geschwindigkeit der ersten Förderstrecke 22 global unverändert gelassen. Die Lücke 49 ist um drei Plätze auf das Förderstreckensegment 32-6 vorgerückt. In der gleichen Zeit hat sich im Wege einer Geschwindigkeitserhöhung der entsprechenden Förderstreckensegmente 36 die Transporteinheit 50-1 um fünf Plätze weiter nach vom auf das Förderstreckensegment 36-6 bewegt. Dies könnte durch eine weitere, optionale Lichtschranke 38 verifiziert werden.

Ferner hat sich eine zweite Transporteinheit 50-2 auf der zweiten Förderstrecke 24 in die Vorzone 34 hineinbewegt. Die Steuerung 40 erkennt aber gleichzeitig, dass es auf der ersten Förderstrecke 22, zumindest in der Vorzone 30, keinen weiteren freien Platz für die Transporteinheit 50-2 gibt. Deshalb entscheidet die Steuereinrichtung 40, dass die Transportgeschwindigkeit der Transporteinheit 50-2 vorerst unverändert bleibt oder sogar verzögert wird. Deshalb hat sich die Transporteinheit 50-2 auch nur um drei Plätze im Vergleich zur Fig. 2B stromabwärts bewegt, während sich die Einheit 50-1 um fünf Plätze bewegt hat.

In Fig. 2D ist die Situation gezeigt, wenn die Transporteinheit 50-1 in die Lücke 49 eingefügt wurde und den Schnittpunkt 26 bereits um zwei Plätze passiert hat. Obwohl sich die Transporteinheiten auf der ersten Förderstrecke 22 weiterhin mit der üblichen mittleren Geschwindigkeit bewegt haben, hat sich die Transporteinheit 50-2 im Vergleich zur Situation der Fig. 2C lediglich um einen Platz stromabwärts bewegt, weil sie verlangsamt bewegt wurde, um eine weitere Lücke abzupassen. Die Steuereinrichtung 40 verfügt jedoch nun über die Information, dass das erste Förderstreckensegment 32-1 der Vorzone 30 eine neue Leerstelle 49' aufweist, in die die Transporteinheit 50-2 der zweiten Förderstrecke 24 gefördert werden kann.

Der eben mit Bezug auf die Transporteinheit 50-1 beschriebene Vorgang wiederholt sich für die Einheit 50-2, jedoch nun unter anderen Umständen. Während die erste Förderstrecke 22 weiterhin mit der mittleren Fördergeschwindigkeit betrieben wird, wird die zweite Förderstrecke 24 bzw. die Förderstreckensegmente 36 der Vorzone 34 der zweiten Förderstrecke 24 verlangsamt betrieben.

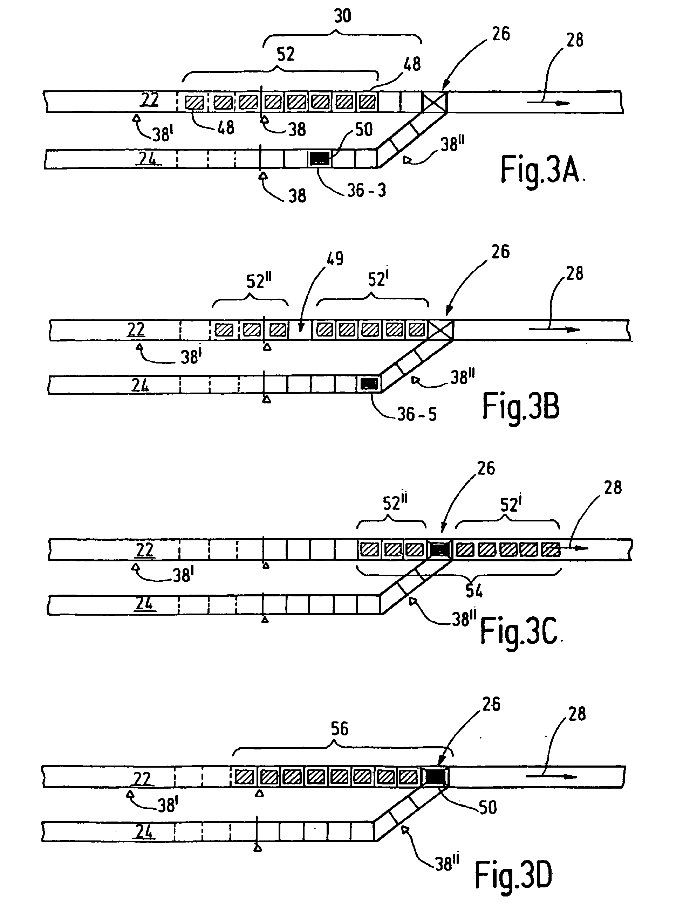

Bezugnehmend auf Fig. 3A ist nochmals eine Förderanlage ähnlich der Figuren 2 gezeigt, jedoch mit einer weiteren exemplarischen Situation. Die erste Förderstrecke 22 weist des weiteren an einem beliebigen Ort vor der Vorzone 30 einen weiteren Sensor 38' auf, damit die Steuereinrichtung 40 möglichst früh über die Verkehrsdichte auf zumindest der ersten Förderstrecke 22 informiert ist.

Im Beispiel der Fig. 3A bilden acht direkt hintereinander folgende Transporteinheiten 48 einen sogenannten Verbund 52 von Transporteinheiten 48. Innerhalb des Verbunds 52 befindet sich keine Lücke, in die die Transporteinheit 50, die sich auf der zweiten Förderstrecke 24 befindet, eingefügt werden könnte. Somit bleiben drei Möglichkeiten, um eine Kollision zu vermeiden. Die Transporteinheit 50 wird entweder vor dem Verbund 52 eingeschleust, nach dem Verbund 52 eingeschleust oder der Verbund 52 wird aufgetrennt, um die erforderliche Lücke 49 zu schaffen.

In den Fig. 3B und 3C ist die letzte Möglichkeit gezeigt. Der Verbund 52 wird in einen ersten Teilverbund 52' und einen zweiten Teilverbund 52" getrennt, indem die Transporteinheiten 48 des ersten Teilverbunds 52' kollektiv kurzzeitig beschleunigt werden. Dadurch entsteht ein gewisser Abstand, d.h. die Lücke 49, zu den restlichen Transporteinheiten 48 des zweiten Teilverbundes 52".

In Fig. 3C ist die Situation gezeigt, bei der die Transporteinheit 50 in die in der Fig. 3B geschaffene Lücke 49 eingefügt wird.

Bezugnehmend auf Fig. 3D ist die Situation gezeigt, bei der die Transporteinheit 50 vor den Verbund 52 gezogen wird. Hier wird die Transporteinheit 50 exemplarisch direkt vor den Verbund 52 der Fig. 3A gezogen, um einen neuen Verbund 56 zu bilden.

Es versteht sich, dass auch die Ansammlung von Transporteinheiten der Fig. 3C einen neuen Verbund hätte bilden können.

Aus den Fig. 3A bis 3D wird deutlich, dass die vorliegende Erfindung auch als Sortiereinrichtung geeignet ist, da "neue" Transporteinheiten an beliebig wählbare Positionen in eine bestehende Sequenz einfügt werden kann, insbesondere an einem vorbestimmten Platz.

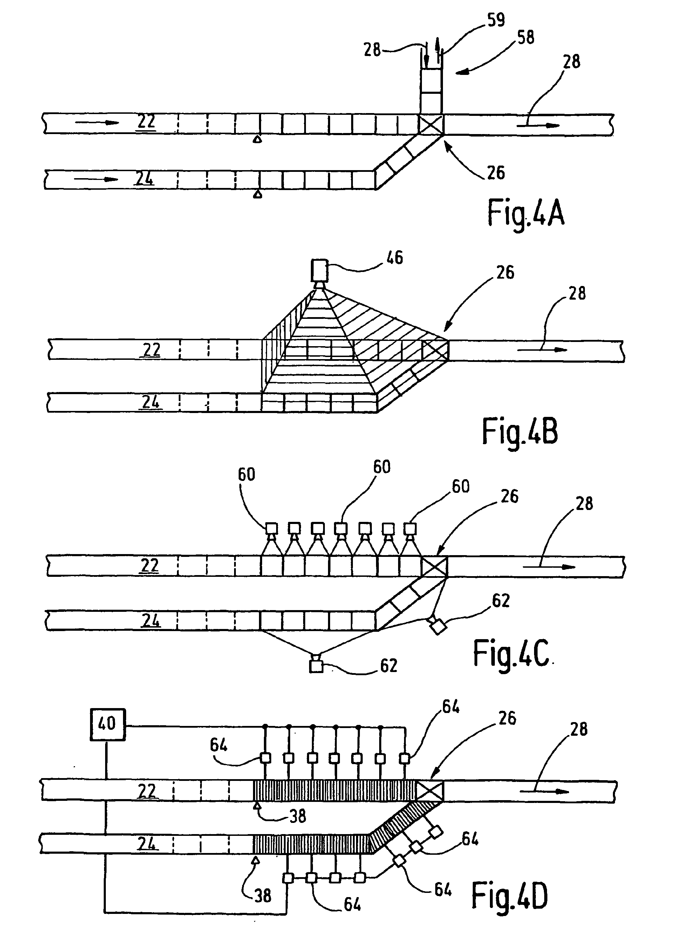

Bezugnehmend auf Fig. 4A ist eine weitere Ausführungsform einer Förderanlage der Erfindung gezeigt.

Die Anlage der Fig. 4A ist ähnlich wie die Anlage der Fig. 2A aufgebaut, wobei zusätzlich eine dritte Förderstrecke 58 vorgesehen ist. Wird die Förderstrecke 58 in der Hauptförderrichtung 28, d.h. stromabwärts, betrieben, laufen somit in dem Schnittpunkt 26 drei Förderstrecken zusammen.

Wird die dritte Förderstrecke 58 hingegen in entgegengesetzter Richtung betrieben, wie es durch einen Pfeil 59 angedeutet ist, stellt der Schnittpunkt 26 eine Kreuzung der zweiten und dritten Förderstrecke 24, 58 mit der ersten Förderstrecke 22 dar. Die Transporteinheiten der zweiten Förderstrecke 24 werden dann auf der dritten Förderstrecke 58 weiterbefördert.

In Fig. 4B ist eine weitere Abwandlung der Förderanlage der Fig. 2A gezeigt. Die Anlage der Fig. 4B ist gleich aufgebaut wie die Anlage der Fig. 2A, außer dass anstatt der Lichtschranken 38 eine einzige Kamera 46 eingesetzt wird, die die Verkehrsdichte zumindest in den Vorzonen 30 und 34 sowie am Schnittpunkt 26 erfasst.

In Fig. 4C ist eine weitere Abwandlung der erfindungsgemäßen Anlage gezeigt. Die Anlage ist genauso aufgebaut wie die Anlage der Fig. 4B, wobei die einzelne Kamera 46 durch eine Vielzahl von Kameras 60 bzw. 62 ausgetauscht wurde. Bei der ersten Förderstrecke 22 wird pro Förderstreckensegment, insbesondere in der Vorzone 30, eine Kamera 60 eingesetzt. Im Bereich der zweiten Förderstrecke 24 wird für das erste gerade Teilstück der Vorzone 34 eine erste Kamera 62 eingesetzt und für das zweite gerade Teilstück, das den Übergang zur ersten Förderstrecke 22 darstellt, wird eine weitere Kamera 62 eingesetzt. Die Kameras 62 überwachen also Abschnitte der Vorzone 34.

Es versteht sich, dass bei der zweiten Förderstrecke 24 alternativ auch Einzelkameras 60 verwendet werden können, wie im Bereich der ersten Förderstrecke 22. Umgekehrt gilt, dass bei der ersten Förderstrecke 22 auch Abschnittskameras 62 eingesetzt werden könnten.

Fig. 4D zeigt eine weitere Abwandlung der erfindungsgemäßen Förderanlage der Fig. 2A.

In den Vorzonen 30 und 34 werden anstatt Gurtförderer Rollenförderer eingesetzt. Jedes Förderstreckensegment ist mit einem eigenen Controller 64 versehen, der den Antrieb regelt. Die Controller 64 stellen untergeordnete Steuereinrichtungen dar. Die Controller 64 sind jeweils an die Steuereinrichtung 40 gekoppelt. Die Controller 64 der ersten Förderstrecke 22 sind parallel an die Steuereinrichtung 40 gekoppelt. Die Controller 64 der zweiten Förderstrecke 24 sind nach Art einer sogenannten "daisy-chain"-Verkettung an den übergeordneten Steuerungsrechner 40 gekoppelt.

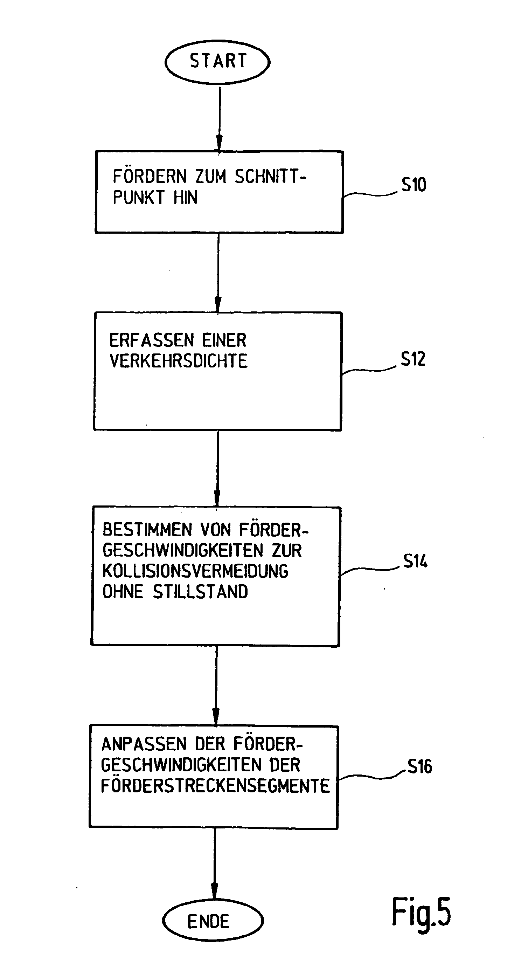

Bezugnehmend auf Fig. 5 ist das Verfahren zum Vermeiden einer Kollision gemäß der vorliegenden Erfindung stark schematisiert dargestellt.

In einem ersten Schritt S10 werden Transporteinheiten 48, 50 zum Schnittpunkt 26 hin transportiert. In einem weiteren Schritt S12 wird eine Verkehrsdichte der Transporteinheiten auf den Förderstrecken, insbesondere bei den am weitesten stromaufwärts gelegenen Fördersegmenten erfasst. In einem Schritt S14 werden Fördergeschwindigkeiten zur Kollisionsvermeidung ohne Stillstand bestimmt. Und in einem Schritt S16 werden die Fördergeschwindigkeiten der Förderstreckensegmente angepasst.

## Patentansprüche

1. Förderanlage (20), mit:
zumindest einer ersten und einer zweiten Förderstrecke (22, 24) zum Fördern von Transporteinheiten (48, 50), insbesondere Behältern, in einer stromabwärts orientierten Richtung (28), wobei sich die Förderstrecken (22, 24, 58) entweder in einem gemeinsamen Schnittpunkt (26) kreuzen oder sich im Schnittpunkt (26) zu einer einzigen Strecke vereinen, wobei jede der Förderstrecken (22, 24, 58) stromaufwärts relativ zum Schnittpunkt (26) jeweils eine Gruppe von Förderstreckensegmenten (32, 36) aufweist;
zumindest einer Steuereinrichtung (40) zum Einstellen variabler Fördergeschwindigkeiten bei jeder Förderstrecke (22, 24); und
zumindest einer Sensoreinrichtung (38, 46, 60, 62) zum Erfassen einer Verkehrsdichte der Transporteinheiten (48, 50) auf den Förderstrecken (22, 24, 58), insbesondere bei am weitesten stromaufwärts gelegenen Förderstreckensegmenten (32-1, 36-1) der Gruppen (30, 34);
wobei jedes Förderstreckensegment (32, 36) von der Steuereinrichtung (40) derart ansteuerbar ist, dass es mit einer variablen, insbesondere kontinuierlich veränderbaren, Fördergeschwindigkeit betrieben werden kann;
wobei die Steuereinrichtung (40) angepasst ist, die Verkehrsdichte zu bestimmen, und die weiter angepasst ist, erste Steuersignale zu erzeugen, um die Fördergeschwindigkeiten der Förderstreckensegmente (36) der einen Förderstrecke (24) so anzupassen, dass eine Transporteinheit (50), die auf der Förderstrecke (24) befördert wird, am Schnittpunkt (26) nicht mit Transporteinheiten (26) kollidiert, die auf der anderen Förderstrecke (22) befördert werden, und zwar ohne dass die Transporteinheiten (48, 50) dazu angehalten werden,
wobei beliebige, aufeinander folgende Förderstreckensegmente mit unterschiedlichen Fördergeschwindigkeiten betreibbar sind.

2. Förderanlage nach Anspruch 1, wobei die Steuereinrichtung (40) ferner angepasst ist, Steuersignale zu erzeugern, um auch die Fördergeschwindigkeiten der Förderstreckensegmente (32) der ersten Förderstrecke (22) so anzupassen, dass die Transporteinheiten (48, 50) nicht am Schnittpunkt (26) angehalten werden müssen oder miteinander kollidieren.

3. Förderanlage nach Anspruch 1 oder 2, wobei die Steuereinrichtung (40) angepasst ist, zusammenhängende Transporteinheiten (48) als Verbund (52) zu erkennen und einen Verbund (52; 52', 52") wie eine einzelne Transporteinheit (48, 50) zu handhaben.

4. Förderanlage nach Anspruch 3, wobei die Steuereinrichtung (40) angepasst ist, zweite Steuersignale zu erzeugen, so dass Transporteinheiten (48) eines Verbunds (52) vereinzelt werden.

5. Förderanlage nach einem der vorhergehenden Ansprüche, wobei die Sensoreinrichtung eine Kamera (46; 60; 62) ist, die eine Bild von Förderstrecken (22, 24) stromaufwärts zum Schnittpunkt (26) erzeugt.

6. Förderanlage nach einem der Ansprüche 1 bis 4, wobei die Sensoreinrichtung eine Lichtschranke (38) ist.

7. Förderanlage nach einem der Ansprüche 1 bis 4, wobei die Sensoreinrichtung ein Drucksensor ist.

8. Förderanlage nach Anspruch 6 oder 7, wobei die Sensoreinrichtung (38; 46, 60, 62) derart weit stromaufwärts vom Schnittpunkt (26) entfernt angeordnet ist, dass die Steuereinrichtung (40) die zur Kollisionsvermeidung erforderlichen Steuersignale in Echtzeit berechnen kann.

9. Förderanlage nach einem der vorhergehenden Ansprüche, wobei bei jedem Förderstreckensegment (32, 36) eine untergeordnete Steuereinrichtung (64) vorgesehen ist, die wiederum an die Steuereinrichtung (40) gekoppelt ist und die einen Antrieb des Förderstreckensegments (32, 36) regelt.

10. Förderanlage nach einem der vorhergehenden Ansprüche, wobei die Sensoreinrichtung (40) angepasst ist, Signale zu liefern, die zum Ermitteln einer Transportgeschwindigkeit jeder Transporteinheit geeignet ist.

11. Verfahren zum Zusammenführen oder Kreuzen von zumindest zwei Förderstrecken (22, 24, 58), auf denen Transporteinheiten (48, 50), insbesondere Behälter, in einer stromabwärts orientierten Richtung (28) befördert werden, wobei sich die Förderstrecken (22, 24) in einem Schnittpunkt (26) treffen, wobei jede Förderstrecke (22, 24, 58) stromaufwärts relativ zum Schnittpunkt (26) jeweils eine Gruppe (30, 34) von Förderstreckensegmenten (32, 34) aufweist, wobei die Förderstreckensegmente jeweils mit einer variablen Fördergeschwindigkeit betrieben werden können, mit den folgenden Schritten:
Fördern von Transporteinheiten (48, 50) hin zum Schnittpunkt (26);
Erfassen und Bestimmen einer Verkehrsdichte der Transporteinheiten (48, 50) auf den Förderstrecken (22, 24, 58), insbesondere bei am weitesten stromaufwärts gelegenen Förderstreckensegmenten (32-1, 34-1);
Bestimmen von Fördergeschwindigkeiten für die Förderstreckensegmente (32, 34) derart, dass Transporteinheiten (48, 50), die auf der einen Förderstrecke (22, 24) gefördert werden, im Schnittpunkt (26) nicht mit Transporteinheiten (48, 50) kollidieren, die auf der anderen Förderstrecke (24, 22) befördert werden, und ohne dass die Transporteinheiten (48, 50) im Bereich der Förderstreckensegmente (32, 34) dazu angehalten werden;
Anpassen der Fördergeschwindigkeiten der Förderstreckensegmente (32, 34) an die so bestimmten Fördergeschwindigkeiten, wobei beliebig aufeinander folgende Förderstreckensegmente (32, 34) mit unterschiedlichen Fördergeschwindigkeiten betrieben werden können.

12. Verfahren nach Anspruch 11, wobei die Förderstrecken in einem Normalzustand mit einer vorbestimmten Fördergeschwindigkeit betrieben werden, und wobei die Fördergeschwindigkeiten der Förderstreckensegmente gegenüber der konstanten mittleren Fördergeschwindigkeit, insbesondere kontinuierlich, erhöht und/oder gesenkt wird, wenn eine Kollision droht.

13. Verfahren nach einem der Ansprüche 11 oder 12, wobei die Fördergeschwindigkeiten so angepasst werden, dass zumindest eine Lücke (49) in einem Verbund (52) von mehreren, direkt aufeinander folgenden Transporteinheiten (48) geschaffen wird.

## Claims

1. A conveyor system (20) comprising:
at least first and second conveyor lines (22, 24) for conveying transport units (48, 50), particularly containers, in a downstream direction (28), wherein the conveyor lines (22, 24, 58) either cross in a common intersection point (26), or combine to one single line in the intersection point (26), wherein each of the conveyor lines (22, 24, 58) comprises, upstream relative to the intersection point (26), respectively one group of conveyor-line segments (32, 36);
at least one control device (40) for setting variable conveying velocities of each of the conveyor lines (22, 24); and
at least one sensor device (38, 46, 60, 62) for detecting a traffic density of the transport units (48, 50) on the conveyor lines (22, 24, 58), particularly at conveyor-line segments (32-1, 36-1) of the groups (30, 34) being located mostly apart upstream;
wherein each of the conveyor-line segments (32, 36) is controllable by the control device (40) such that it can be operated at a variable, particularly continuously changeable, conveying velocity;
wherein the control device (40) is adapted to determine the traffic density, and is further adapted to generate first control signals for adapting the conveying velocities of the conveyor-line segments (36) of one of the conveyor lines (24) such that a transport unit (50), which is conveyed on the one of the conveyor lines (24), does not collide at the intersection point (26) with transport units (26), which are conveyed on the other one of the conveyor lines (22), without stopping the transport units (48, 50) for this purpose,
wherein arbitrary subsequently arranged conveyor-line segments are operable at different conveying velocities.

2. The conveyor system of claim 1, wherein the control device (40) is further adapted to generate control signals for adapting also the conveying velocities of the conveyor-line segments (32) of the first conveyor line (22) so that the transport units (48, 50) do not need to be stopped at the intersection point (26), or collide with each other.

3. The conveyor system of claim 1 or 2, wherein the control device (40) is adapted to recognize associated transport units (48) as a group (52), and to handle a group (52; 52', 52") like one single transport unit (48, 50).

4. The conveyor system of claim 3, wherein the control device (40) is adapted to generate second control signals so that transport units (48) of a group (52) are separated.

5. The conveyor system of any of the preceding claims, wherein the sensor device is a camera (46; 60; 62) generating an image of conveyor lines (22, 24) located upstream relative to the intersection point (26).

6. The conveyor system of any of the claims 1 to 4, wherein the sensor unit is a light barrier (38).

7. The conveyor system of any of the claims 1 to 4, wherein the sensor unit is a pressure sensor.

8. The conveyor system of claim 6 or 7, wherein the sensor unit (38; 46, 60, 62) is arranged upstream apart relative to the intersection point (26) such that the control device (40) can calculate the control signals in real time, which are required for the avoidance of collisions.

9. The conveyor system of any of the preceding claims, wherein, with each of the conveyor-line segments (32, 36), a subordinated control device (64) is provided which in turn is coupled to the control device (40) and controls a drive of the conveyor-line segment (32, 36).

10. The conveyor system of any of the preceding claims, wherein the sensor unit (40) is adapted to supply signals which are suitable for determining a transport velocity of each of the transport units.

11. A method for merging or crossing of at least two conveyor lines (22, 24, 58) on which transport units (48, 50), particularly containers, are conveyed along a downstream orientated direction (28), wherein the conveyor lines (22, 24) meet in a intersection point (26), wherein each of the conveyor lines (22, 24, 58) comprises upstream relative to the intersection point (26) respectively one group (30, 34) of conveyor-line segments (32, 34), wherein the conveyor-line segments are respectively operable with a variable conveying velocity, the method comprising the following steps:
conveying transport units (48, 50) towards the intersection point (26);
detecting and determining a traffic density of the transport units (48, 50) on the conveyor lines (22, 24, 58), particularly at the conveyor-line segments (32-1, 34-1) which are located mostly apart upstream;
determining conveying velocities for the conveyor-line segments (32, 34) so that transport units (48, 50) which are conveyed on one of the conveyor lines (22, 24), do not collide at the intersection point (26) with transport units (48, 50), which are conveyed on the other one of the conveyor lines (24, 22), and without the need to stop the transport units (48, 50) in a region of the conveyor-line segments (32, 34);
adapting the conveying velocities of the conveyor-line segments (32, 34) to the conveying velocities determined in this way, wherein arbitrary conveyor-line segments (32, 34) following each other can be operated at different conveying velocities.

12. The method of claim 11, wherein the conveyor lines are operated at a predetermined conveying velocity under normal conditions, and wherein the conveying velocities of the conveyor-line segments are, particularly continuously, increased and/or decreased if a collision approaches, in comparison to the constant average conveying velocity.

13. The method of claim 11 or 12, wherein the conveying velocities are adapted so that at least one gap (49) is generated in a group (52) of a plurality of transport units (48) following directly each other.

## Revendications

1. Installation de transport (20), comportant:
au moins une première et une deuxième voies de transport (22,24) pour transporter des unités de transport (48,50), notamment des récipients, dans une direction (28) orientée en aval, dans laquelle les voies de transport (22, 24, 58) soit se croisent dans un point d'intersection (26) commun, soit se réunissent au point d'intersection (26) en une voie unique, dans laquelle chacune des voies de transport (22, 24, 58) présente en amont du point d'intersection (26) respectivement un groupe de segments de voies de transport (32, 36) ;
au moins un dispositif de commande (40) pour régler des vitesses de transport variables sur chaque voie de transport (22, 24) ; et
au moins un dispositif de détection (38, 46, 60, 62) pour enregistrer une densité de circulation des unités de transport (48, 50) sur les voies de transport (22, 24, 58), notamment sur les segments de voies de transport (32-1, 36-1) situés le plus loin en amont des groupes (30, 34) ;
dans laquelle chaque segment de voie de transport (32, 36) peut être commandé par le dispositif de commande (40) de telle sorte qu'il puisse être exploité avec une vitesse de transport variable, notamment modifiable en continu ;
dans laquelle le dispositif de commande (40) est adapté afin de déterminer la densité de circulation, et est d'autre part adapté afin de générer des premiers signaux de commande, afin d'adapter les vitesses de transport des segments de voies de transport (36) d'une des voies de transport (24) de telle sorte qu'une unité de transport (50), qui est transportée sur la voie de transport (24), n'entre pas en collision au point d'intersection (26) avec des unités de transport (26), qui sont transportées sur l'autre voie de transport (22), c'est-à-dire sans que les unités de transport (48, 50) ne soient arrêtées,
dans laquelle des segments de voies de transport au choix se succédant peuvent être exploités avec des vitesses de transport différentes.

2. Installation de transport selon la revendication 1, dans laquelle le dispositif de commande (40) est en outre adapté afin de générer des signaux de commande, afin d'adapter aussi les vitesses de transport des segments de voies de transport (32) de la première voie de transport (22) de telle sorte que les unités de transport (48, 50) ne doivent pas être arrêtées au point d'intersection (26) ou n'entrent pas en collision les unes avec les autres.

3. Installation de transport selon la revendication 1 ou 2, dans laquelle le dispositif de commande (40) est adapté afin de reconnaître des unités de transport (48) agrégées comme un assemblage (52) et de manipuler un assemblage (52; 52', 52") comme une unité de transport individuelle (48,50).

4. Installation de transport selon la revendication 3, dans laquelle le dispositif de commande (40) est adapté afin de générer des deuxièmes signaux de commande, de telle sorte que des unités de transport (48) d'un assemblage (52) soient individualisées.

5. Installation de transport selon une des revendications précédentes, dans laquelle le dispositif de détection est une caméra (46 ; 60 ; 62), qui génère une image des voies de transport (22, 24) en amont du point d'intersection (26).

6. Installation de transport selon une des revendications 1 à 4, dans laquelle le dispositif de détection est une cellule de détection photoélectrique (38).

7. Installation de transport selon une des revendications 1 à 4, dans laquelle le dispositif de détection est un capteur de pression.

8. Installation de transport selon la revendication 6 ou 7, dans laquelle le dispositif de détection (38 ; 46, 60, 62) est disposé en étant suffisamment éloigné en amont du point d'intersection (26), de telle sorte que le dispositif de commande (40) puisse calculer en temps réel les signaux de commande requis pour éviter des collisions.

9. Installation de transport selon une des revendications précédentes, dans laquelle sur chaque segment de voie de transport (32, 36) un dispositif de commande (64) subordonné est prévu, qui est à son tour couplé au dispositif de commande (40) et qui régule un entraînement du segment de voie de transport (32, 36).

10. Installation de transport selon une des revendications précédentes, dans laquelle le dispositif de détection (40) est adapté afin de délivrer des signaux, qui sont appropriés pour déterminer une vitesse de transport de chaque unité de transport.

11. Procédé pour réunir ou croiser au moins deux voies de transport (22, 24, 58), sur lesquelles des unités de transport (48, 50), notamment des récipients, sont transportés dans une direction (28) orientée en aval, dans lequel les voies de transport (22, 24) se rencontrent en un point d'intersection (26), dans lequel chaque voie de transport (22, 24, 58) présente en amont du point d'intersection (26) respectivement un groupe (30, 34) de segments de voies de transport (32, 34), dans lequel les segments de voies de transport peuvent être respectivement exploités avec une vitesse de transport variable, comportant les étapes suivantes consistant à :
transporter des unités de transport (48, 50) jusqu'au point d'intersection (26) ;
enregistrer et déterminer une densité de circulation des unités de transport (48, 50) sur les voies de transport (22, 24, 58), notamment sur un segment de voie de transport (32-1, 34-1) placé le plus loin en amont ;
déterminer des vitesses de transport pour les segments de voies de transport (32, 34) de telle sorte que des unités de transport (48, 50), qui sont transportées sur une des voies de transport (22, 24), n'entrent pas en collision au point d'intersection (26) avec des unités de transport (48, 50), qui sont transportées sur l'autre voie de transport (24, 22), et sans que les unités de transport (48, 50) ne soient arrêtées dans ce but au niveau des segments de voies de transport (32, 34) ;
adapter les vitesses de transport des segments de voies de transport (32, 34) aux vitesses de transport ainsi déterminées, dans lequel des segments de voies de transport se succédant au choix (32, 34) peuvent être exploités avec des vitesses de transport différentes.

12. Procédé selon la revendication 11, dans lequel les voies de transport sont exploitées dans un état normal avec une vitesse de transport prescrite, et dans lequel les vitesses de transport des segments de voies de transport par rapport aux vitesses de transport moyennes constantes sont augmentées et/ou diminuées, notamment en continu, quand une collision menace.

13. Procédé selon une des revendications 11 ou 12, dans lequel les vitesses de transport sont adaptées de telle sorte qu'au moins un espace vide (49) dans un assemblage (52) de plusieurs unités de transport (48) se succédant directement soit ménagé.
